# EUROPÄISCHE PATENTANMELDUNG

(11) **EP 0 904 965 A2**
(43) Veröffentlichungstag der Anmeldung: **31.03.1999**
(21) Anmeldenummer: 98114787.9
(22) Anmeldetag: 06.08.1998
(51) Int. Cl.: B60J 7/08

(54) **Rolldachanordnung an einem Fahrzeug**

(30) Priorität: 30.09.1997 DE 19743108
(71) Anmelder: Bayerische Motoren Werke Aktiengesellschaft, 80788 München (DE)
(72) Erfinder: Clausen-Schaumann, Andreas, 82347 Bernried (DE); Minatti, Johann, 80935 München (DE); Moll, Patrick, 81375 München (DE); Seibt, Klaus, 80809 München (DE)

(57) **Zusammenfassung**

Die Erfindung betrifft eine Rolldach-Anordnung an einem Fahrzeug, insbesondere Personenkraftwagen, wobei mehrere hintereinander angeordnete, gelenkig miteinander verbundene Fahrzeugdach-Elemente ausgehend von einer eine Dachöffnung abdeckenden Position auf eine endseitig vorgesehene Rolle aufrollbar sind, welche im Hinblick auf den durch das Aufrollen der Dachelemente zunehmenden Rollendurchmesser höhenverstellbar ist. Alternativ zu oder gleichzeitig mit der Rolle kann auch ein einen Bestandteil des Fahrzeugdaches bildender und die Rolle nach außen hin abdeckender Spoilerkasten im Hinblick auf den durch das Aufrollen der Dachelemente zunehmenden Rollendurchmesser höhenverstellbar sein. Erfindungsgemäß wird die Höhenverstellung der Rolle und/oder des Spoilerkastens durch ein Getriebe initiiert. Bevorzugt ist die Höhenverstellung des Spoilerkastens über ein Pantografengetriebe an die Höhenverstellung der Rolle gekoppelt. In einer bevorzugten Ausführungsform kann die Rolle mit ihrer Drehachse in zumindest einer verschwenkbar an der Fahrzeug-Karosserie befestigten Schwinge gelagert sein, welche durch Elemente des Getriebes gezielt verschwenkt wird, wobei in der Schwinge längsverschiebbar die Pantografenführung angeordnet ist.

## Beschreibung

Die Erfindung betrifft eine Rolldach-Anordnung an einem Fahrzeug, insbesondere Personenkraftwagen, wobei mehrere hintereinander angeordnete, gelenkig miteinander verbundene Fahrzeugdach-Elemente ausgehend von einer eine Dachöffnung abdeckenden Position auf eine endseitig vorgesehene Rolle aufrollbar sind, welche im Hinblick auf den durch das Aufrollen der Dachelemente zunehmenden Rollendurchmesser höhenverstellbar ist. Alternativ zu oder gleichzeitig mit der Rolle kann auch ein einen Bestandteil des Fahrzeugdaches bildender und die Rolle nach außen hin abdeckender Spoilerkasten im Hinblick auf den durch das Aufrollen der Dachelemente zunehmenden Rollendurchmesser höhenverstellbar sein.
Zum technischen Umfeld wird neben der DE 196 10 751 C1 oder der DE 34 20 641 A1 insbesondere auf die nicht vorveröffentlichte deutsche Patentanmeldung 196 16 971 verwiesen.

Rolldächer für Fahrzeuge sind in unterschiedlichen Ausführungsformen bekannt geworden, wie beispielshalber die beiden erstgenannten Schriften zeigen, haben sich jedoch trotz einiger systemimmanenter Vorteile insbesondere an Personenkraftwagen bis heute noch nicht durchgesetzt. Vielmehr sind neben Schiebedächern mit einem starren Deckelteil im wesentlichen nur die sog. Stoff-Faltdächer realisiert. Ein Grund hierfür mag die Problematik im Zusammenhang mit der Unterbringung der das Rolldach im geöffneten Zustand aufnehmenden Rolle sein, die dann einen relativ großen Durchmesser besitzt.

Eine möglche Abhilfemaßnahme hierfür ist in der letztgenannten, nicht vorveröffentlichten deutschen Patentanmeldung 196 16 971 beschrieben, wonach zumindest die im wesentlichen im endseitigen Bereich der Fahrzeug-Dachöffnung angeordnete Rolle höhenverstellbar ist (bezogen auf das Fahrzeug). Alternativ oder zusätzlich hierzu kann auch ein die Rolle abdeckender bzw. aufnehmender Spoilerkasten, der einen beweglichen Bestandteil des Fahrzeugdaches bildet, bezogen auf das Fahrzeug höhenverstellbar sein.

Hat nun die Rolle, auf welche das Rolldach bzw. die Fahrzeugdach-Elemente desselben aufgewickelt werden, bei geschlossenem Rolldach einen relativ geringen Durchmesser, so kann sich diese Rolle und/oder der Spoilerkasten in einer bezüglich des Fahrzeuges bzw. des Fahrzeugdaches relativ niedrigen Position befinden, so daß der Luftwiderstand des Fahrzeuges relativ gering ist. Wird hingegen das Rolldach geöffnet, so muß die Rolle und/oder der Spoilerkasten bezüglich des Fahrzeugdaches angehoben werden, um das Rolldach bzw. die gelenkig miteinander verbundenen Fahrzeugdach-Elemente aufnehmen zu können. Die damit verbundene Erhöhung des Fahrzeug-Luftwiderstandes ist jedoch vertretbar, da auch die nunmehr offenliegende Dachöffnung eine erhebliche Luftwiderstandserhöhung verursacht, wobei das Fahrzeug mit geöffnetem Rolldach ohnehin zumeist nur mit einer relativ niedrigen Fahrgeschwindigkeit bewegt wird, bei welcher der Einfluß des Luftwiderstandes auf den Kraftstoffverbrauch nicht so wesentlich ist.

In der nicht vorveröffentlichten deutschen Patentanmeldung 196 16 971 ist vorgeschlagen, die Rolle und/oder den Spoilerkasten unter Ausnutzung des beim Aufwickeln des Rolldaches zunehmenden Rollendurchmessers höhenzuverstellen, wobei sich die auf die Rolle aufgewickelten FahrzeugdachElemente an der Fahrzeug-Karosserie abstützen, so daß die Rolle mit wachsendem Durchmesser zwangsläufig angehoben wird. Gleiches gilt bezüglich des Spoilerkastens, der mit seiner Innenwand auf der Rolle aufliegt.

Wegen der Reibung zwischen den auf die Rolle aufgewickelten Fahrzeugdach-Elementen und der Karosserie einerseits sowie zwischen den Dachelemeneten und dem Spoilerkasten andererseits, sind jedoch Verbesserungen wünschenswert, die aufzuzeigen sich die vorliegende Erfindung zur Aufgabe gestellt hat.
Die Lösung dieser Aufgabe ist gekennzeichnet durch ein die Höhenverstellung der Rolle und/oder des Spoilerkastens initiierendes Getriebe. Vorteilhafte Aus- und Weiterbildungen sind Inhalt der Unteransprüche.

Erfindungsgemäß wird die Rolle und/oder der Spoilerkasten quasi durch Einwirkung von außen gezielt unterschiedlich positioniert, d.h. in der Höhe bezüglich des Fahrzeuges verstellt, wobei an der Rolle (bevorzugt an deren Drehachse) bzw. am Spoilerkasten Elemente eines Getriebes angreifen. Betätigt bzw. in Gang gesetzt wird dieses Getriebe durch eine geeignete Stelleinrichtung, die verschiedenartig ausgebildet sein kann. Wesentlich ist, daß die Rolle und/oder der Spoilerkasten nicht mehr durch das Rolldach selbst, d.h. durch die auf die Rolle aufgewickelten Fahrzeugdach-Elemente, sondern durch ein eigenständiges Getriebe unterschiedlich positioniert werden.

Was eine das Getriebe betätigende Stelleinrichtung betrifft, so kann hierfür entweder ein separarter, beliebig ausgebildeter Stellmotor vorgesehen sein, oder es kann die Rotationsbewegung der Rolle oder die Translationsbewegung der Fahrzeugdach-Elemente zur Betätigung des Getriebes herangezogen werden. Auch diese Ausgestaltung, bei welcher die Höhenverstellung der Rolle und/ oder des Spoilerkastens über Elemente des Getriebes durch die Rotationsbewegung der Rolle oder die Translationsbewegung der Fahrzeugdach-Elemente initiiert wird, soll unter den Begriff der Stelleinrichtung fallen.
Dabei - sowie generell - können als Getriebe Koppelgetriebe, Kulissen- bzw. Kurvengetriebe, Schraubengetriebe, Seilgetriebe, sowie geeignete Getriebekombinationen zum Einsatz kommen.

Bevorzugt wird die Höhenverstellung des Spoilerkastens über ein bspw. als Pantografengetriebe ausgebildetes Zwischengetriebe an die Höhenverstellung der Rolle gekoppelt, nachdem zwischen den jeweils günstigsten Positionen dieser beiden Bauteile ein eindeutiger funktionaler Zusammenhang besteht. In einer bevorzugten Ausführungsform ist die Pantografenführung des Pantografengetriebes in einer Schwinge längsverschiebbar angeordnet, welche ihrerseits verschwenkbar und somit höhenverstellbar ist, und welche die Rolle über deren Drehachse trägt.

Dies sowie weitere ggf. erfindungswesentliche Merkmale und Vorteile gehen auch aus der folgenden Beschreibung eines bevorzugten Ausführungsbeispieles hervor. Von den beigefügten Figuren zeigt
- Fig. 1: einen Längsschnitt einer erfindungsgemäßen Rolldach-Anordnung ( = Schnitt B-B aus Fig. 4) mit der Rolle und dem Spolilerkasten im abgesenkten Zustand,
- Fig. 2: eine analoge Darstellung mit der Rolle und dem Spoilerkasten im angehobenen Zustand
- Fig. 3: den Schnitt A-A aus Fig. 1,
- Fig. 4: die Ansicht X aus Fig. 3, sowie
- Fig. 5: eine in den Randbereichen vergrößerte Darstellung von Fig. 4, wobei der mittlere Bereich ausgeschnitten wurde.

Mit der Bezugsziffer 23 ist eine Rolle bezeichnet, auf die ein nicht dargestelltes Rolldach eines Fahrzeuges aufgewickelt werden kann. Dieses Rolldach besteht aus einer Vielzahl von in Fahrzeug-Längsrichtung 1 hintereinander angeordneten, gelenkig miteinander verbundenen Fahrzeugdach-Elementen und kann bspw. so wie im eingangs genannten Stand der Technik gezeigt aufgebaut sein.

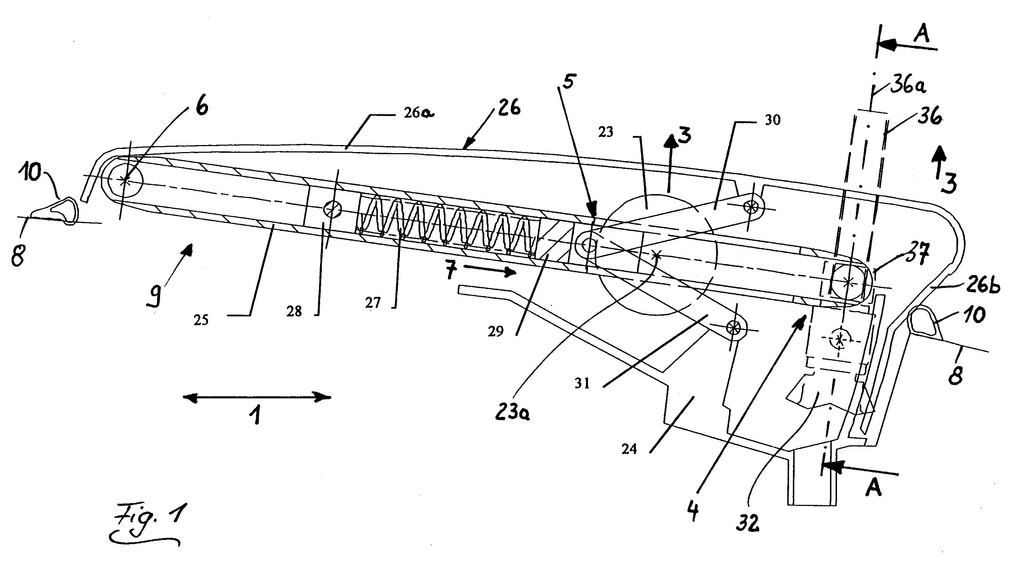

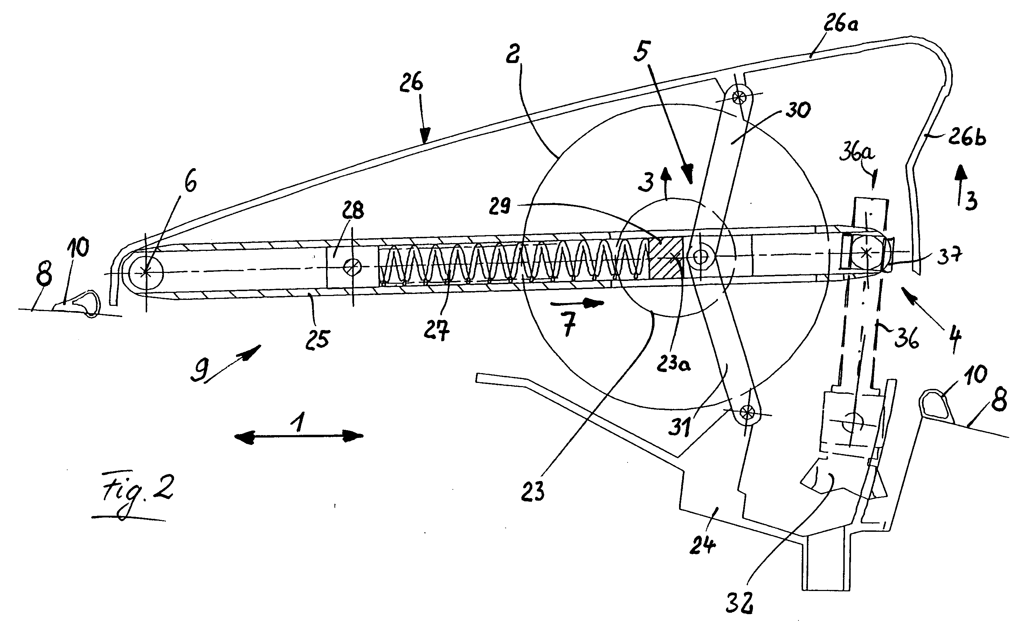

Die für das Aufwickeln bzw. Abwickeln des Rolldaches um ihre Drehachse 23a drehbare Rolle ist auf geeignete, später noch näher erläuterte Weise an der Karosserie des Fahrzeuges gelagert, wobei der Anbringort bezüglich der Karosserie im Dachbereich liegt und zwar endseitig bezüglich der vom Rolldach verschließbaren Dachöffnung. Dies ist hier nicht dargestellt, kann jedoch so gestaltet sein wie in der eingangs genannten nicht vorveröffentlichten deutschen Patentanmeldung 196 16 971 gezeigt. Bevorzugt ist dabei das Rolldach in Richtung der Fahrzeug-Längsachse verschiebbar, so daß sinnvollerweise die Drehachse 23a der Rolle 23 quer zur Fahrzeug-Längsachse 1 verläuft, d.h. bei der Darstellung in den Fig. 1, 2 senkrecht zur Zeichenebene.

Oberhalb der Rolle 23 ist ein sog. Spoilerkasten 26 dargestellt, der einen Bestandteil des ansonsten nur bruchstückhaft gezeigten Fahrzeugdaches 8 bildet. Dieser Spoilerkasten 26 besteht aus einem Spoilerdeckel 26a sowie Kastenseitenwänden 26b und fungiert als Gehäuse bzw. Verkleidung für die Rolle 23 incl. deren Betätigungsmechanismus sowie für den der vorliegenden Erfindung zugrunde liegenden Mechanismus.

Wird das Rolldach auf die Rolle 23 aufgewickelt, so wächst deren Durchmesser zwangsläufig an, wie auch ein Vergleich der Figuren 1 und 2 zeigt. Fig. 1 zeigt nämlich den Zustand, in welchem das Rolldach vollständig von der Rolle 23 abgewickelt ist, während in Figur 2 der äußere Umfang des vollständig aufgewickelten Rolldaches dargestellt und mit der Bezugsziffer 2 bezeichnet ist.
Nachdem das Rolldach nicht komplett auf der Rolle 23 untergebracht werden kann, wenn sich diese in der in Fig. 1 dargestellten Position befindet, ist es erforderlich, die Rolle 23 beim Aufwickeln des Rolldaches anzuheben, d.h. gemäß Pfeilrichtung 3 höhenzuverstellen, und somit bspw. in die in Fig. 2 dargestellte Position zu bringen.

Gleiches gilt für den Spoilerkasten 26. Auch dieser muß ausgehend von der in Fig. 1 gezeigten Position gemäß Pfeilrichtung 3 in die in Fig. 2 dargestellte Position angehoben bzw. höhenverstellt werden, wenn das Rolldach komplett auf die Rolle 23 aufgewickelt werden soll. Hierzu ist der Spoilerkasten 26 in bzw. gegen Pfeilrichtung 3 bezüglich eines Schwenklagers 6, in welchem er mit seinem vorderen, in den Figuren 1, 2 linksseitigen Abschnitt auf nicht gezeigte Weise an der Fahrzeug-Karosserie angelenkt ist, verschwenkbar. Im Randbereich des im Fahrzeugdach 8 vorgesehenen Dachausschnittes 9 zur Aufnahme des Spoilerkastens 26 sind hierbei geeignete Dichtungen 10 vorgesehen.

Selbstverständlich kann die Rolle 23 sowie der Spoilerkasten 26 auch Zwischen-Positionen zwischen den beiden in den Figuren 1, 2 dargestellten Extrem-Positionen einnehmen, wenn nur ein Teil des Rolldaches, d.h. nur einige der hintereinander angeordneten und gelenkig miteinander verbundenen Fahrzeugdach-Elemente auf die Rolle 23 aufgewickelt wird/werden.

Die Höhenverstellung der Rolle 23 sowie des Spoilerkastens 26 erfolgt mit Hilfe eines in seiner Gesamtheit mit 4 bezeichneten Getriebes. Dabei ist die Höhenverstellung des Spoilerkastens 26 sinnvollerweise über ein in seiner Gesamtheit mit 5 bezeichnetes Zwischengetriebe an die Höhenverstellung der Rolle 23 gekoppelt, derart, daß bei einer durch das Getriebe 4 initiierten Höhenverstellung der Rolle 23 gleichzeitig durch das Zwischengetriebe 5 der Spoilerkasten 26 mit höhenverstellt wird.

Was die Höhenverstellbarkeit der Rolle 23 betrifft, so ist diese mit ihrer Drehachse 23a in zumindest einer Schwinge 25 gelagert. Beim hier erläuterten Ausführungsbeispiel ist an den beiden Enden der Rolle 23 jeweils eine Schwinge 25 vorgesehen, so daß sich die beiden Schwingen 25 jeweils in Fahrzeug-Längsrichtung 1 erstreckend linksseitig sowie rechtsseitig der Dachöffnung bzw. allgemein bezüglich des Fahrzeuges befinden.

Die beiden Schwingen 25 sind mit ihrem ersten (in Fig. 1, 2 linksseitigen) Ende in jeweils einem Schwenklager 6 an der Fahrzeug-Karosserie angelenkt, derart, daß das zweite (rechtsseitige) Ende jeder Schwinge 25 in bzw. gegen Pfeilrichtung 3 um dieses Schwenklager 6 verschwenkbar ist.
Mit diesem zweiten (rechtsseitigen) Ende stützen sich die beiden Schwingen 25, die in diesem Bereich über eine sog. Schwingenspindelmutter 37 miteinander verbunden sind, auf einer im wesentlichen vertikal stehenden Gewindespindel 36 ab.

Die um ihre Längsachse 36a in Rotation versetzbare Gewindespindel 36 ist auf später noch kurz erläuterte Weise an der Fahrzeug-Karosserie befestigt. Bei der auf das Gewinde der Gewindespindel 36 mit ihrem passenden Gegengewinde aufgeschraubten Schwingenspindelmutter 37 handelt es sich wie ersichtlich um ein langgestrecktes, quer zur Fahrzeug-Längsachse 1 und somit parallel zur Rollen-Drehachse 23a ausgerichtetes Bauteil, welches mit seinen Enden in endseitigen Aufnahmeöffnungen 25a der Schwingen 25 gelagert ist.

Mit den bislang beschriebenen Elementen ist es somit möglich, mittels einer Rotation der Gewindespindel 36 um ihre Längsachse 36a abhängig von der jeweiligen Rotationsrichtung die Schwingenspindelmutter 37 in bzw. gegen Pfeilrichtung 3 zu verschieben. Die Schwingenspindelmutter 37 nimmt dabei die Schwingen 25 mit, so daß auch diese in bzw. gegen Pfeilrichtung 3 verschwenkt werden. Dies hat zur Folge, daß die in den Schwingen 25 gelagerte Rolle 23 wie gewünscht in bzw. gegen Pfeilrichtung 3 höhenverstellt wird. Somit stellen die Gewindespindel 36, die Schwingenspindelmutter 37, sowie die Schwingen 25 Elemente des in seiner Gesamtheit mit 4 bezeichneten Getriebes zur Höhenverstellung der Rolle 23 dar.

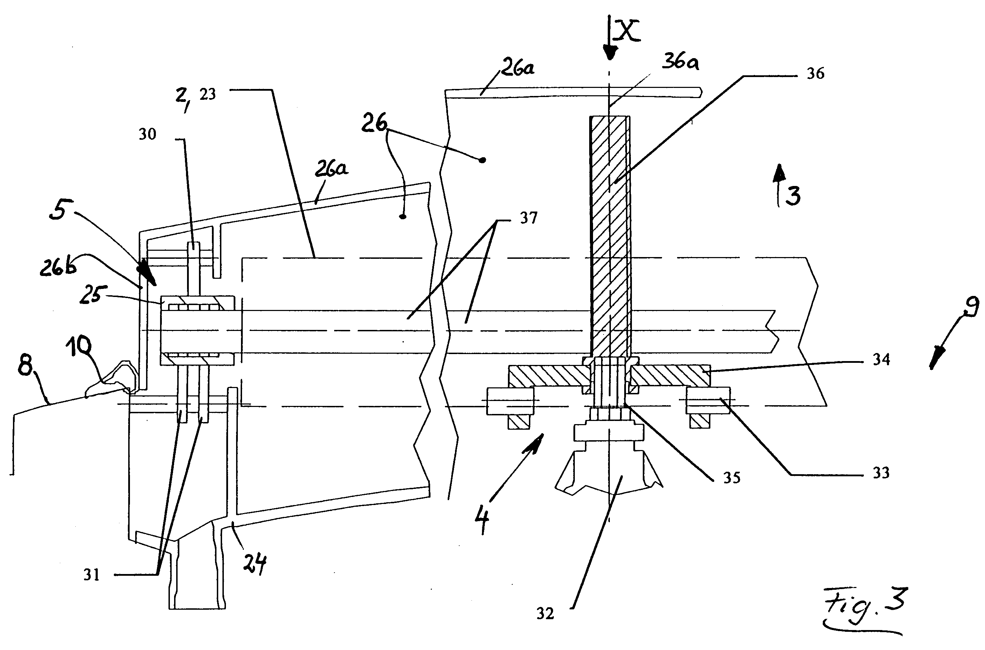

Was die Höhenverstellung des Spoilerkastens 26 betrifft, so ist diese - wie bereits erwähnt - an die Höhenverstellung der Rolle 23 gekoppelt, und zwar über das in seiner Gesamtheit mit 5 bezeichnete Zwischengetriebe, welches hier als Pantografengetriebe ausgebildet ist. Bestandteile dieses Pantografen- bzw. Zwischengetriebes 5 sind eine Pantografenführung 29, an der ein Stellhebel 30 sowie ein Stützhebel 31 angelenkt ist. Ein weiteres Element dieses Zwischengetriebes 5 ist/sind die Schwinge(n) 25, nachdem - wie ersichtlich - die Pantografenführung 29 in bzw. gegen Pfeilrichtung 7 längsverschiebbar in der hohl ausgebildeten Schwinge 25 geführt ist.
Nachdem hier zwei Schwingen 25 vorgesehen sind, sind selbstverständlich auch zwei parallel arbeitende Pantografengetriebe bzw. Zwischengetriebe 5 vorgesehen, so daß sowohl linksseitig als auch rechtsseitig der Dachöffnung des Fahrzeuges jeweils ein Paar von Hebeln 30, 31 vorhanden sind.
Im übrigen sind auf jeder Fahrzeugseite zwei Stützhebel 31 vorgesehen, wie Fig. 3 zeigt, jedoch ist dies für die beschriebene, erfindungsgemäße Funktion nicht erforderlich.

Der Stützhebel 31 ist mit seinem der Pantografenführung 29 abgewandten Ende gelenkig an der Karosserie des Fahrzeuges angebunden, und zwar hier an einem sog. Dachrahmenmodul 24.
Der Stellhebel 30 ist mit seinem der Pantografenführung 29 abgewandten Ende gelenkig am Spoilerkasten 26 angebunden, und zwar hier an einer von der Innenseite des Spoilerdeckels 26a abragenden, nicht näher bezeichneten Nase.

Werden somit ausgehend von der in Fig. 1 gezeigten Position der einzelen Bauteile die Schwingen 25 - wie bereits erläutert - durch Rotation der Gewindespindel 36 gemäß Pfeilrichtung 3 verschwenkt, so wird durch den Stützhebel 31 die Pantografenführung 29 innerhalb der Schwinge 25 gemäß Pfeilrichtung 7 längsverschoben. Hierbei wird der Stellhebel 30 mitgenommen und in einer solchen Weise verschwenkt, daß der Spoilerkasten 26 bzw. das rechtsseitige Ende desselben gemäß Pfeilrichtung 3 angehoben bzw. um sein Schwenklager 6 verschwenkt und somit in die in Fig. 2 dargestellte Position höhenverstellt wird.

Es sei kurz darauf hingewiesen, daß beim hier gezeigten Ausführungsbeispiel im Schwenklager 6 sowohl der Spoilerkasten 26 als auch die Schwinge 25 verschwenkbar angelenkt sind, jedoch stellt dies lediglich eine Maßnahme zur Verringerung des Bau- und Montageaufwandes dar. Für die Funktion des erfindungsgemäßen Rolldaches ist dies hingegen nicht erforderlich.
Ebenfalls im Zusammenhang hiermit sei darauf hingewiesen, daß die Höhenverstellung der Rolle 23 und/oder des Spoilerkastens 26 selbstverständlich auch andersartig als hier gezeigt erfolgen kann, so bspw. durch geeignete translatorische Verschiebung.

Was die Gestaltung des hier als Zwischengetriebe 5 fungierenden Pantografengetriebes betrifft, so sind dessen Abmessungen so gewählt, daß der Winkel zwischen der Schwinge 25 und der Verbindungslinie zwischen deren Schwenklager 6 sowie dem Lagerpunkt des Stützhebels 31 am Dachrahmenmodul 24 im Verhältnis 1:1 auf den Winkel zwischen der Schwinge 25 und der Verbindungslinie zwischen deren Schwenklager 6 sowie dem Lagerpunkt des Stellhebels 30 am Spoilerkasten 26 übertragen wird, jedoch kann hier alternativ auch eine Unter- oder Übersetzung vorgesehen sein.

Ferner sei darauf hingewiesen, daß die sog. Winkelübertragung auch mittels anderer Mechanismen erfolgen kann.

Zurückkommend auf die Rotation der Gewindespindel 36, aufgrund welcher die beschriebene Höhenverstellung der Rolle 23 sowie des Spoilerkastens 26 erfolgt, so ist hierfür ein separater Stellantrieb 32 vorgesehen, der beispielsweise als geeignet ansteuerbarer Elektromotor ausgebildet sein kann. Die Abtriebswelle dieses Elektromotors kann direkt an der Gewindespindel 36 angeflanscht sein, es ist jedoch auch eine Ankoppelung über ein geeignetes Getriebe, wie bspw. einen Seilzug möglich. Auch kann über ein derartiges geeignetes Getriebe eine Rotation der Gewindespindel 36 durch ein anderes bewegtes Element des Rolldaches, so beispielsweise durch einen Antriebsmotor für die Rolle 23 oder durch die Dachelemente selbst ausgelöst werden.

Insbesondere zur Unterstützung des Stellantriebes 32 bei einer Ausstellbewegung des Spoilerkastens 26 sowie einer Höherverstellung der Rolle 23 ist im Inneren der hohl ausgebildeten Schwinge 25 ein als Schraubendruckfeder ausgebildtes Federelement 27 vorgesehen, das mit seinem einen Ende an einem bezüglich der Schwinge 25 fixen Widerlager 28 anliegt, und an dessen anderem Ende sich die Pantografenführung 29 abstützt. Dieses Federelement 27 nimmt somit einen Teil des Gewichtes von Rolle 23 und Spoilerkasten 26 auf. Durch geeignete Festlegung der Kennwerte des Federelementes 27 sowie der Abmessungen des als Zwischengetriebe 5 fungierenden Pantografengetriebes kann ein günstiger Verlauf der Gewichtsentlastung im Bewegungsablauf bezüglich des Gewichtes der Rolle 23 sowie des Spilerkastens 26 auf den gesamten Mechanismus erzielt werden.

Darüberhinaus wird durch das Federelement 27 das gesamte System, d.h. das Getriebe 4 und das Zwischengetriebe 5 verspannt, so daß die Enstehung von Klappergeräuschen vermieden wird. Zur Optimierung der Funktion des Federelementes 27 können die Federkraftwirkungslinie und die Angriffspunkte der Feder variiert werden, so bspw. indem das Widerlager 28 nicht fix bezüglich der Schwinge 25, sondern karosseriefest angebunden wird. Auch kann ein zusätzliches Hilfs-Getriebe zwischen das Federelement 27 und den sog. Hubmechanismus, d.h. das Getriebe 4 und/oder das Zwischengetriebe 5 geschaltet werden. Zur Kompensation von Störkräften können in gleicher Weise geeignete Dämpfersysteme in das Gesamtsystem eingebracht werden.

Zurückkommend auf die Höhenverstellung bzw. Ausstellbewegung des Spoilerkastens 26 sowie auf die Höhenverstellung der Rolle 23 erkennt man, daß aufgrund der gewählten Kinematik bzw. Schwenkbewegungen hierbei auch die Gewindespindel 36 geringfügig in der Zeichenebene der Figuren 1, 2 bzw. senkrecht zur Zeichenebene von Fig. 3 verschwenkt wird. Daher ist die Gewindespindel 36 über ein Pendellager 34 schwenkbar in karosseriefesten Zapfen 33 gelagert. Der entsprechende Winkelausgleich zwischen der Schwingenspindelmutter 37 und den Schwingen 25 erfolgt durch die dargestellte kreiszylindrische Lagerung der Schwingenspindelmutter 37 in den kreisförmigen Aufnahmeöffnungen 25a der Schwingen 25. Anstelle der gezeigten Ausbildung können hier jedoch auch elastische Lagerelemente zum Einsatz kommen.

In gleicher Weise kann die oben beschriebene sog. Schwenklagerung der Gewindespindel 36 durch elastische Lagerelemente ersetzt werden. Dabei entlastet diese sog. Schwenklagerung einen an der Gewindespindel 36 angeflanschten Stellantrieb 32 von Axialkräften. Dabei kann die Gewindespindel 36 direkt am beispielsweise als Elektromotor ausgebildeten Stellantrieb 32 bzw. an einer nicht näher bezeichneten Abtriebswelle desselben angeflanscht sein, daneben ist es jedoch auch möglich, zwischen diesem Stellantrieb 32 und der Gewindespindel 36 eine momentenübertragende Ausgleichskupplung 35 (bspw. ein Gummielement, eine Faltenbalgkupplung oder ein Kardangelenk) einzubauen. Insbesondere im Falle einer direkten Anflanschung kann ferner vorgesehen sein, daß die Schwingenspindelmutter 37 gegenüber der bzw. den Schwinge(n) 25 sowohl rotatorisch als auch translatorisch bewegbar ist.

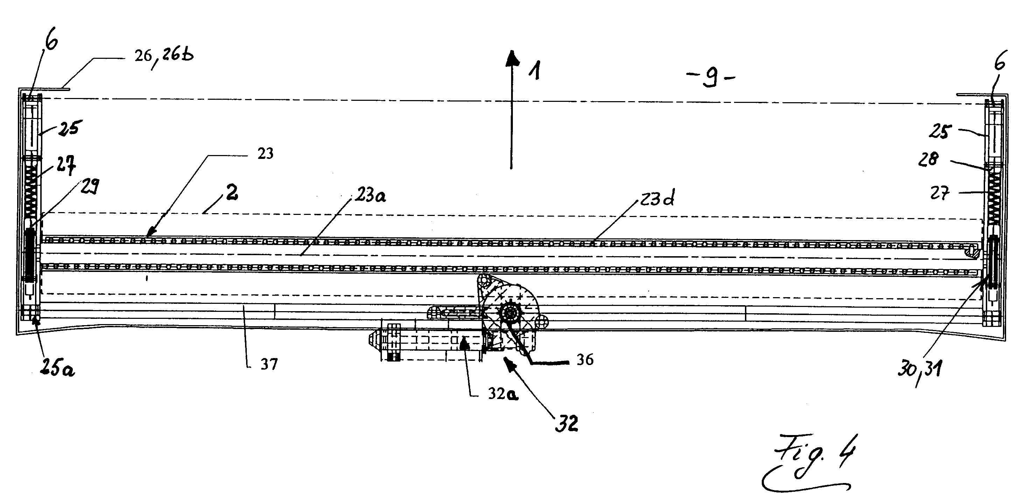

Im übrigen erkennt man in Fig. 4 detaillierter die Anordnung des in seiner Gesamtheit mit 32 bezeichneten Stellantriebes, der neben einem Elektromotor 32a einen Umlenktrieb 32b besitzt. Wie ersichtlich ist der Elektromotor 32a mit seiner nicht näher bezeichneten Abtriebswelle quer zur Fahrzeug-Längsrichtung 1 ausgerichtet, so daß der Umlenktrieb 32b dessen Rotationsbewegung auf die im wesentlichen vertikal ausgerichtete Gewindespindel 36 überträgt.

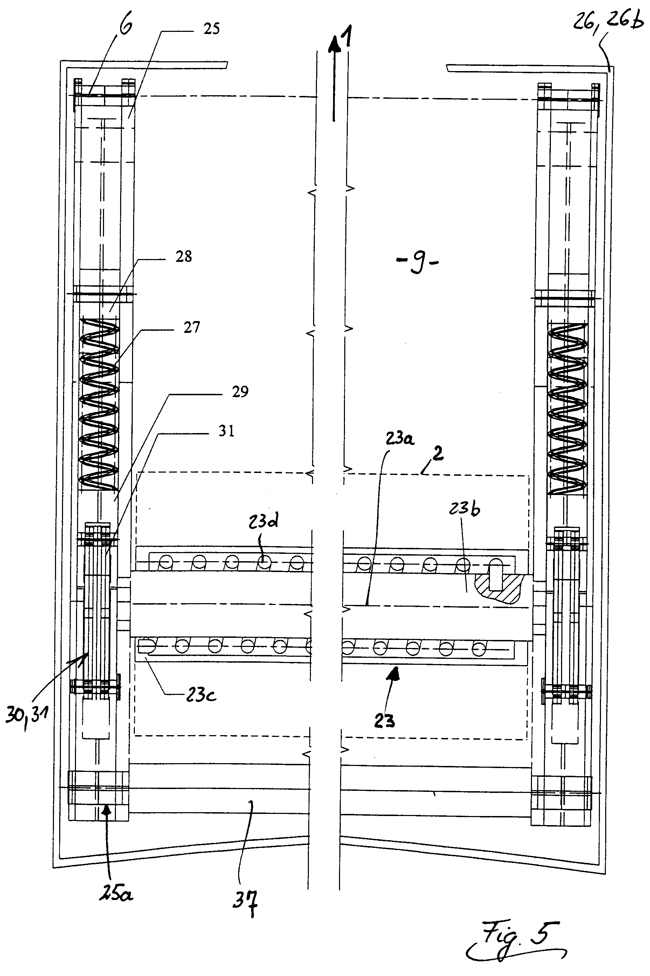

In Fig. 4, in welcher die Fahrzeug-Längsrichtung 1 durch den in Fahrzeugmitte verlaufenden Pfeil dargestellt ist, sowie in Fig. 5, in der die Randbereiche des Spoilerkastens 26 sowie insbesondere das Zwischengetriebe 5 vergrößert dargestellt sind, erkennt man ferner den detaillierten Aufbau der Rolle 23. Diese besteht aus einem mit den Schwingen 25 verbundenen Rolleninnenteil 23b sowie einem hierauf drehgelagerten Rollenaußenteil 23c. Diese beiden Rollenteile 23b, 23c sind jeweils kreiszylindrisch geformt und konzentrisch zueinander sowie zur Drehachse 23a der in ihrer Gesamtheit mit 23 bezeichneten Rolle angeordnet. Zwischen den beiden Rollenteilen 23b, 23c ist eine Wickelfeder 23d vorgesehen, deren Zentralachse mit der Drehachse 23a zusammenfällt und deren erstes Ende am Rolleninnenteil 23b befestigt ist, während deren zweites Ende innenseitig am Rollenaußenteil 23c befestigt ist. Mit dieser Wickelfeder 23d kann die Rolle 23 bzw. das Rollenaußenteil 23c, auf welches die Fahrzeugdach-Elemente aufgewickelt werden, somit in einem gewünschten Drehsinn unter Vorspannung gehalten werden, jedoch kann dies sowie eine Vielzahl weiterer Details insbesondere konstruktiver Art durchaus abweichend vom gezeigten Ausführungsbeispiel gestaltet sein, ohne den Inhalt der Patentansprüche zu verlassen.

### Bezugszeichenliste:

- 1: Fahrzeug-Längsrichtung
- 2: Umfang des auf 23 aufgewickelten Rolldaches
- 3: Pfeilrichtung: Höhenverstellung von 23 und 26
- 4: Getriebe (in seiner Gesamtheit), bestehend aus 25, 36 und 37
- 5: Zwischengetriebe in Gesamtheit, bestehend aus 25, 29, 30, 31
- 6: Schwenklager
- 7: Pfeilrichtung: Verschiebung von 29 in 25
- 8: Fahrzeugdach
- 9: Dachausschnitt zur Aufnahme von 26
- 10: Dichtung an 9
- 23: Rolle zum Aufwickeln des Rolldaches
- 23a: Drehachse von 23
- 23b: Rolleninnenteil
- 23c: Rollenaußenteil
- 23d: Wickelfeder
- 24: Dachrahmenmodul
- 25: Schwinge
- 25a: Aufnahmeöffnung in 25 für 37
- 26: Spoilerkasten
- 26a: Spoilerdeckel
- 26b: Kastenseitenwand
- 27: Federelement
- 28: Widerlager
- 29: Pantografenführung
- 30: Stellhebel
- 31: Stützhebel
- 32: Stellantrieb
- 32a: Elektromotor
- 32b: Umlenktrieb
- 33: karosseriefeste Zapfen
- 34: Pendellager
- 35: Ausgleichskupplung
- 36: Gewindespindel
- 36a: Längsachse von 36
- 37: Schwingenspindelmutter

## Patentansprüche

1. Rolldach-Anordnung an einem Fahrzeug, insbesondere Personenkraftwagen, wobei mehrere hintereinander angeordnete, gelenkig miteinander verbundene Fahrzeugdach-Elemente ausgehend von einer eine Dachöffnung abdeckenden Position auf eine endseitig vorgesehene Rolle (23) aufrollbar sind, welche im Hinblick auf den durch das Aufrollen der Dachelemente zunehmenden Rollendurchmesser höhenverstellbar ist,
gekennzeichnet durch ein die Höhenverstellung der Rolle (23) initiierendes Getriebe (4).

2. Rolldach-Anordnung an einem Fahrzeug, insbesondere Personenkraftwagen, wobei mehrere hintereinander angeordnete, gelenkig miteinander verbundene Fahrzeugdach-Elemente ausgehend von einer eine Dachöffnung abdeckenden Position auf eine endseitig vorgesehene Rolle (23) aufrollbar sind und wobei ein einen Bestandteil des Fahrzeugdaches (8) bildender und die Rolle (23) nach außen hin abdeckender Spoilerkasten (26) im Hinblick auf den durch das Aufrollen der Dachelemente zunehmenden Rollendurchmesser höhenverstellbar ist,
gekennzeichnet durch ein die Höhenverstellung des Spoilerkastens (26) initiierendes Getriebe (4, 5).

3. Rolldach-Anordnung nach Anspruch 1 und 2,
dadurch gekennzeichnet, daß die Höhenverstellung des Spoilerkastens (26) über ein Zwischengetriebe (5) an die Höhenverstellung der Rolle (23) gekoppelt ist.

4. Rolldach-Anordnung nach Anspruch 1,
dadurch gekennzeichnet, daß die Rolle (23) mit ihrer Drehachse (23a) in zumindest einer verschwenkbar an der Fahrzeug-Karosserie befestigten Schwinge (25) gelagert ist, welche durch Elemente des Getriebes (4) gezielt verschwenkt wird.

5. Rolldach-Anordnung nach Anspruch 3 und 4,
dadurch gekennzeichnet, daß die Schwinge (25) Bestandteil des als Pantografengetriebe ausgebildeten Zwischengetriebes (5) ist, wozu in der Schwinge (25) längsverschiebbar die Pantografenführung (29) angeordnet ist, an der ein mit der Fahrzeug-Karosserie verbundener Stützhebel (31) sowie ein mit dem Spoilerkasten (26) verbundener Stellhebel (30) angelenkt sind.

6. Rolldach-Anordnung nach Anspruch 5,
dadurch gekennzeichnet, daß die Pantografenführung (29) an einem eine Höherverstellung des Spoilerkastens (26) unterstützenden Federelement (27) abgestützt ist.

7. Rolldach-Anordnung nach einem der vorangegangenen Ansprüche,
dadurch gekennzeichnet, daß die Höhenverstellung der Rolle (23) und/ oder des Spoilerkastens (26) über Elemente des Getriebes (4, 5) durch die Rotationsbewegung der Rolle (23) oder durch die Translationsbewegung der Fahrzeugdach-Elemente initiiert wird.

8. Rolldach-Anordnung nach Anspruch 7,
dadurch gekennzeichnet, daß Elemente des Getriebes (4, 5) ein an der Rolle (23) befestigtes Zahnrad sowie eine mit diesem kämmende geeignet befestigte Zahnstange sind.

9. Rolldach-Anordnung nach einem der Ansprüche 1 - 6,
dadurch gekennzeichnet, daß die Höhenverstellung der Rolle (23) und/ oder des Spoilerkastens (26) über Elemente des Getriebes (4, 5) durch einen separaten Stellantrieb (32) erfolgt.

10. Rolldach-Anordnung nach einem der vorangegangenen Ansprüche,
dadurch gekennzeichnet, daß Elemente des Getriebes (4) eine im wesentlichen vertikal ausgerichtete um ihre Längsachse (36a) in Rotation versetzbare Gewindespindel (36) sowie eine auf dieser geführte und an der Schwinge (25) befestigte Schwingenspindelmutter (37) sind.

11. Rolldach-Anordnung nach Anspruch 10,
dadurch gekennzeichnet, daß die Gewindespindel (36) an der Fahrzeug-Karosserie sowie die Schwingenspindelmutter (37) an der Schwinge (25) jeweils um eine zur Drehachse (23a) der Rolle (23) parallele Achse zumindest geringfügig verschwenkbar gelagert sind.

12. Rolldach-Anordnung nach einem der vorangegangenen Ansprüche,
dadurch gekennzeichnet, daß die Gewindespindel (36) fest am Stellantrieb (32) angeflanscht und die Schwingenspindelmutter (37) gegenüber der Schwinge (25) rotatorisch und translatorisch bewegbar ist.
